# EUROPÄISCHE PATENTSCHRIFT

(11) **EP 1 221 194 B1**
(45) Veröffentlichungstag und Bekanntmachung des Hinweises auf die Patenterteilung: **09.04.2003**
(21) Anmeldenummer: 00967607.3
(22) Anmeldetag: 22.09.2000
(51) Int. Cl.: H03C 3/00

(54) **EINRICHTUNG UND VERFAHREN ZUR SPEKTRALEN FORMUNG EINES SENDESIGNALS IN EINEM FUNKSENDER**
DEVICE AND METHOD FOR SPECTRAL SHAPING OF A TRANSMISSION SIGNAL IN A RADIO TRANSMITTER
DISPOSITIF ET PROCEDE DE MISE EN FORME SPECTRALE D'UN SIGNAL D'EMISSION DANS UN EMETTEUR RADIO

(30) Priorität: 29.09.1999 DE 19946722
(43) Veröffentlichungstag der Anmeldung: 10.07.2002
(73) Patentinhaber: Infineon Technologies AG, 81669 München (DE)
(72) Erfinder: SCHNEIDER, Michael, 56823 Büchel (DE); JUNG, Peter, 67697 Otterberg (DE); KELLA, Tideya, 80337 München (DE); PLECHINGER, Jörg, 80469 München (DE); DOETSCH, Markus, 56072 Koblenz-Rübenach (DE); SCHMIDT, Peter, 82008 Unterhaching (DE)
(74) Vertreter: Lange, Thomas, Dr.
(86) Internationale Anmeldenummer: DE0003346
(87) Internationale Veröffentlichungsnummer: WO01024354

(56) Entgegenhaltungen:
- EP-A- 0 458 385
- EP-A- 0 693 844
- EP-A- 0 944 215
- US-A- 5 818 867

## Beschreibung

Die Erfindung betrifft eine Einrichtung und ein Verfahren zur spektralen Formung eines Sendesignals in einem Funksender, insbesondere Mobilfunksender, nach den Oberbegriffen der Ansprüche 1 und 7.

Ein bekannter digitaler Quadratur-Modulator (EP 0 693 844) weist ein digitales Filter zur spektralen Formung einer Inphasal- und einer Quadratur-Komponente eines digitalen Eingangssignals auf. Jedem Multiplizierer des digitalen Filters ist dabei ein Multiplexer mit zwei Eingängen (für den I- und den Q-Zweig) vorgeschaltet und ein Demultiplexer mit einem Eingang und zwei Ausgängen nachgeschaltet. Dadurch werden für die Filterung des I- und des Q-Zweiges dieselben (gemultiplexten) Multiplizierer verwendet.

Bei einer bekannten nichtrekursiven Halb-Band-Filtervorrichtung (EP 0 622 898 A2) wird zur Verarbeitung eines komplexwertigen Eingangssignals unter Verminderung der Abtastrate in ein komplexwertiges Ausgangssignal eine einzige Filteranordnung vorgesehen. In diese Filteranordnung wird zeitlich versetzt Real- und Imaginärteil des Eingangssignals eingespeist. Die Filtervorrichtung weist dazu Verzögerungsglieder auf, die zur sequentiellen Aufnahme und Zwischenspeicherung von abwechselnd Real- und Imaginärteil gekoppelt sind.

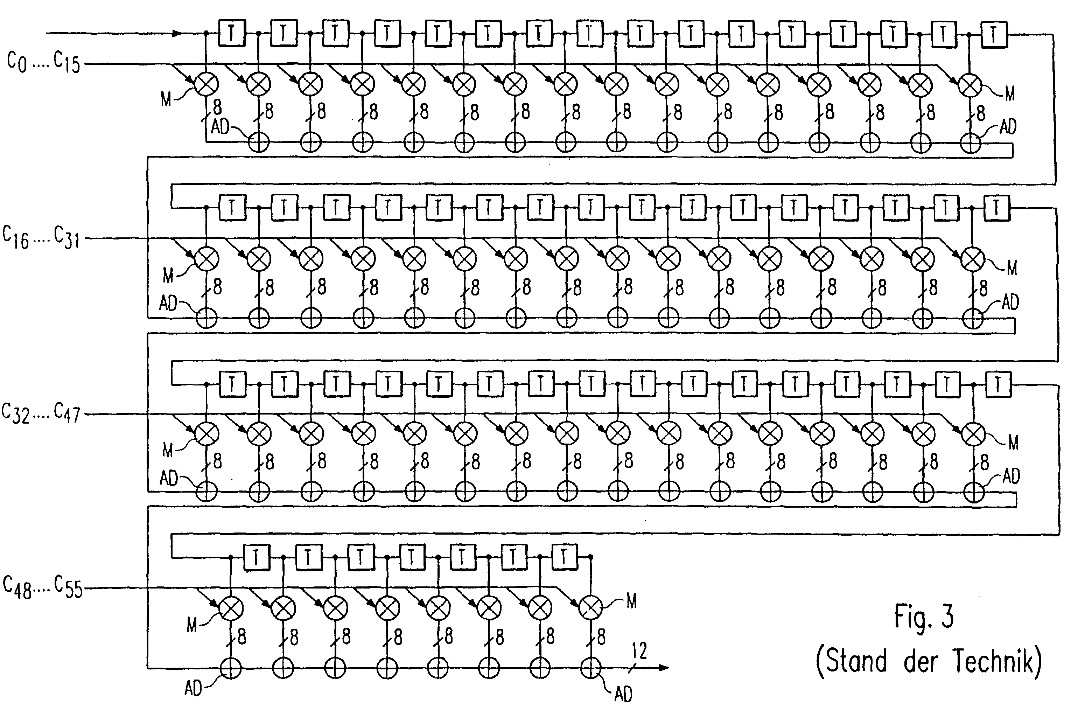

Es ist bereits bekannt, ein wertediskretes (digitales) Sendesignal vor dem Umsetzen in ein analoges Basisbandsignal und dem Heraufmischen des letzteren in einen hochfrequenten Verkehrskanal einer Signalformung zu unterziehen, um eine schmalbandige und damit Frequenz-Resourcen-schonende Informationsübertragung zu ermöglichen. Die Signalformung wird üblicherweise durch mindestens zwei digitale Filter bewerkstelligt, die im Inphasal-Zweig (I-Zweig) bzw. im Quadratur-Zweig (Q-Zweig) des Signalwegs im Funksender angeordnet sind. Jedes digitale Filter weist eine große Anzahl von Multiplizierern auf (siehe Fig. 3).

Bei einem typischen DSP-(digital signal processor)-Senderchip für einen Mobilfunksender können die Filter bis zu etwa 70 % der Chipfläche ausmachen. Nachteilig ist also, daß aufgrund der vielfachen Verwendung identischer Komponenten (Filter, Multiplizierer) ein beträchtlicher Hardware-Realisierungsaufwand für die spektrale Signalformung erforderlich ist.

Der Erfindung liegt die Aufgabe zugrunde, eine Einrichtung zur spektralen Formung eines wertediskreten Sendesignals in einem Funksender zu schaffen, deren Realisierungsaufwand verhältnismäßig gering gehalten werden kann. Ferner zielt die Erfindung darauf ab, ein Verfahren zur spektralen Formung eines wertediskreten Sendesignals in einem Funksender anzugeben, durch das der Realisierungsaufwand für die entsprechende Hardware verringert werden kann.

Zur Lösung der Aufgabe sind die Merkmale der Ansprüche 1 und 7 vorgesehen.

Das Grundprinzip der Erfindung besteht darin, dass jeder der jeweils N Speicherplätze der beiden. Schieberegister M>1 Signalabgriffe aufweist und die Filterschaltung im Multiplexbetrieb betrieben wird, um dadurch zu ermöglichen, daß sowohl die I-Komponente als auch die Q-Komponente des Sendesignals mit ein- und derselben Filterschaltung spektral geformt werden. Dadurch läßt sich die Anzahl der tatsächlich auf einem Senderchip realisierten Multiplizierer und damit auch der Bedarf an Chipfläche deutlich reduzieren.

Ein weiterer Vorteil der Erfindung besteht darin, daß die beiden Ausgangssignale (I-Komponente, Q-Komponente des Sendesignals) nach der Filterung - bedingt durch die Mehrfachspeicherabgriffe - mit einer höheren Rate als die entsprechenden Signale an den Eingängen der erfindungsgemäßen Signal-Formungseinrichtung vorliegen. Dies ist vorteilhaft, da für die weitere Signalverarbeitung zur Unterdrückung von Störungen in jedem Fall eine Überabtastung vorgenommen werden müßte, die sich bei der Erfindung aber "automatisch" ergibt.

Eine besonders bevorzugte Ausführungsform der Erfindung kennzeichnet sich dadurch, daß einem einzelnen Multiplizierer mehrere Filterkoeffizienten zugeordnet sind. In diesem Fall wird nicht nur die Filterschaltung mehrfach (nämlich für den I- und den Q-Zweig) genutzt, sondern es wird auch jeder Multiplizierer mehrfach (nämlich für die unterschiedlichen Filterkoeffizienten) verwendet, d.h. noch Hardwareeffizienter eingesetzt.

Eine erste bevorzugte Ausführungsform der erfindungsgemäßen Einrichtung kennzeichnet sich dadurch, daß die Multiplexiereinheit aus N x M Multiplexern mit jeweils zwei Multiplexereingängen aufgebaut ist. In diesem Fall arbeiten die Multiplizierer alternierend im I- und Q-Zweig des Signalweges.

Eine zweite bevorzugte Ausführungsform, die die bereits erwähnte Mehrfach-Nutzung der Multiplizierer bezüglich verschiedener Filterkoeffizienten realisiert, kennzeichnet sich dadurch, daß die Multiplexiereinheit aus N Multiplexern mit jeweils 2 x M Multiplexereingängen aufgebaut ist. Hier arbeitet ein Multiplizierer dann für M Multiplexer-Arbeitstakte im I-Zweig und für die nächsten M Multiplexer-Arbeitstakte im Q-Zweig, usw.

Weitere vorteilhafte Ausgestaltungen der Erfindung sind in den Unteransprüchen angegeben.

Die Erfindung wird nachfolgend anhand von zwei Ausführungsformen unter Bezugnahme auf die Zeichnung näher erläutert; in dieser zeigt:
- Fig. 1: ein Blockschaltbild eines Funksenders zur allgemeinen Erläuterung der Signalverarbeitung in demselben;
- Fig. 2: ein Blockschaltbild, das den Signalweg von vier Sendesignalen mit einer spektralen Formung jeweils der I- und Q-Signalkomponenten nach dem Stand der Technik darstellt;
- Fig. 3: ein Schaltbild eines einzelnen RRC-Filters nach dem Stand der Technik;
- Fig. 4: ein Schaltbild eines Modulators für vier Datensignale mit einer erfindungsgemäßen spektralen Signal-Formungseinrichtung;
- Fig. 5: ein Schaltbild einer ersten Ausführungsform der spektralen Signal-Formungseinrichtung aus Fig. 4; und
- Fig. 6: ein Schaltbild einer zweiten Ausführungsform der spektralen Signal-Formungseinrichtung aus Fig. 4.

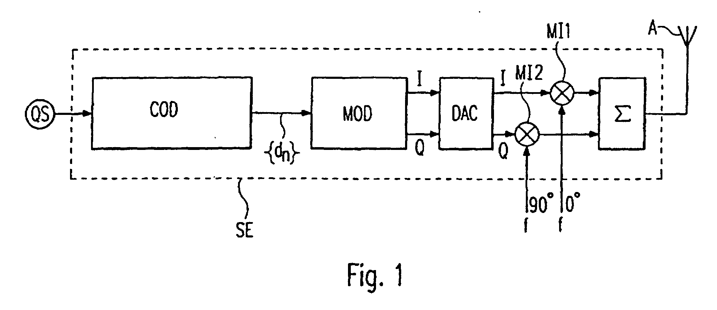

Fig. 1 zeigt die als solche bereits bekannte prinzipielle Struktur einer Sendeeinrichtung SE eines Funksenders, wie er beispielsweise in einer Basisstation oder einer Mobilstation eines Mobilfunksystems eingesetzt wird.

Die Sendeeinrichtung SE nimmt ein (beispielsweise durch ein Mikrofon erzeugtes) analoges Quellensignal QS entgegen und führt dieses einem Codierer COD zu. Der Codierer COD umfaßt in nicht dargestellter Weise einen Analog-Digital-Umsetzer zur Digitalisierung des Quellensignals QS und kann ferner einen Quellencodierer, einen Kanalcodierer, einen Verschachteler und einen Blockbildner enthalten, die das digitalisierte Quellensignal QS in geeigneter Weise Quellen-codieren, fehlerschutzcodieren, verschachteln und in Datenblöcke unterteilen.

Der Codierer COD gibt ein wertediskretes Datensignal aus, das aus einer Datenfolge {dₙ} der Elemente d₀, d₁, ... besteht.

Die Datenfolge {dₙ} wird einer Modulatoreinrichtung MOD zugeführt, die die Datenfolge für die Abstrahlung über einen hochfrequenten Träger moduliert und - bei einem CDMA(code division multiple access)-System - jedem Datensymbol einen Teilnehmer-individuellen Spreizcode aufprägt. Zur Modulation kann beispielsweise ein CPM-(continuous phase modulation)Verfahren mit stetiger Phase und konstanter komplexer Einhüllenden verwendet werden, und für die CDMA-Teilnehmercodierung kann eines der bekannten Spreizcodierverfahren, beispielsweise DS-(direct sequencing) CDMA-, MC-(multi carrier)CDMA oder auch FH-(frequency hopping)CDMA eingesetzt werden.

Die Modulatoreinrichtung MOD nimmt ferner eine Aufteilung des Datensignals in den I-Zweig und den Q-Zweig vor. Die von der Modulatoreinrichtung MOD ausgegebenen I- und Q-Signalkomponenten werden einem Digital-Analog-Umsetzer DAC zugeführt, der die entsprechenden analogen I- und Q-Signalkomponenten erzeugt. Diese werden jeweils in Mischstufen MI1 bzw. MI2 mittels eines hochfrequenten Trägers der Frequenz f unter 90° Phasenversatz zueinander hochgemischt, überlagert und über eine Antenne A als Funksignal abgestrahlt.

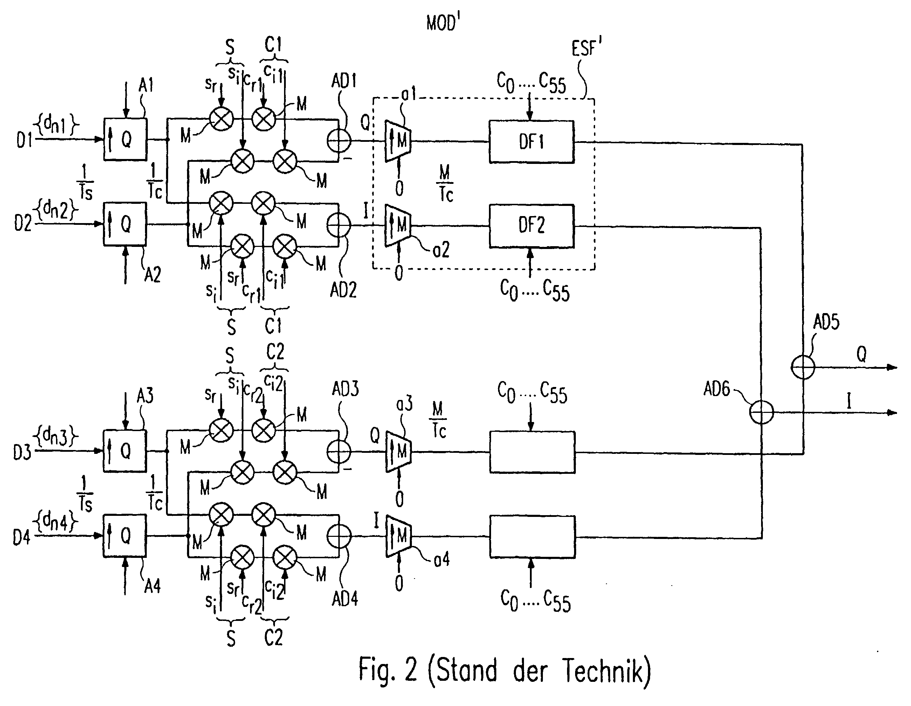

Fig. 2 zeigt eine Modulatoreinrichtung MOD' nach dem Stand der Technik. Die Modulatoreinrichtung MOD' weist vier Dateneingänge D1, D2, D3 und D4 auf und eignet sich somit zum gleichzeitigen Aufbau von vier physikalischen Kanälen.

An den Dateneingängen D1, D2, D3 und D4 liegen die Datenfolgen {dₙ₁}, {dₙ₂}, {dₙ₃} und {dₙ₄} an.

Die Datenfolgen {dₙ₁}, {dₙ₂}, {dₙ₃} und {dₙ₄} werden von Abtaststufen A1, A2, A3, A4 in Überabtastung (Überabtastfaktor Q) abgetastet. Dadurch wird die Datenrate in jedem Signalweg von 1/T_{S} auf 1/T_{C} erhöht, wobei T_{S} die Symbolzeitdauer der einzelnen Datensymbole dₙ₁ (bzw. dₙ₂, dₙ₃, dₙ₄) bezeichnet und T_{C} die (kürzere) Chipzeitdauer bezeichnet, die die Zeitbasis für die spätere CDMA-Codierung darstellt. Im Falle eines UMTS-(universal mobile telecommunications systems)-Senders der dritten Mobilfunk-Generation beträgt die Datenrate 1/T_{c} am Ausgang der Abtaststufen A1, A2, A3, A4 (d.h. die Chiprate) 4,096 x 10⁶ Abtastungen pro Sekunde.

Die (überabgetasteten) Datensymbole werden anschließend von Multiplizierern M mit einem komplexen Verwürfelungs-Code S und zwei CDMA-Codes C1 (für die Datensymbole dₙ₁ und dₙ₂) bzw. C2 (für die Datensymbole dₙ₃ und dₙ₄) multipliziert. Dabei bezeichnen sᵣ, cᵣ₁ und cᵣ₂ die Realteile und sᵢ, cᵢ₁ und cᵢ₂ die Imaginärteile der Elemente'der vorstehend genannten Codefolgen.

Durch Addition der Real- und Imaginärteile der so erzeugten Signale in den Addierern AD1, AD2, AD3 und AD4 werden die I-Komponenten und die Q-Komponenten der entsprechenden digitalen Sendesignale erzeugt.

Die weitere Signalbearbeitung wird anhand der den Dateneingängen D1 und D2 zugeordneten Q- und I-Signalkomponenten erläutert, die in der oberen Hälfte der Fig. 2 dargestellt sind. Die Verarbeitung der den Dateneingängen D3 und D4 zugeordneten Q- und I-Signalkomponenten ist entsprechend.

Die Q- und I-Signalkomponenten werden einer Einrichtung zur spektralen Signalformung ESF' eingegeben, deren Umfang in Fig. 2 durch eine gestrichelte Linie dargestellt ist. Die Einrichtung zur spektralen Signalformung ESF' umfaßt bezüglich jede Signalkomponente eine Abtaststufe a1 bzw. a2, die die Signalrate durch eine nochmalige Überabtastung auf ein Mehrfaches M der Chiprate 1/T_{C} erhöhen.

Den Abtaststufen a1 bzw. a2 sind digitale Filter DF1, DF2 nachgeschaltet, die zur spektralen Formung der Q-Signalkomponente bzw. der I-Signalkomponente dienen. Die Struktur der digitalen Filter DF1, DF2 gemäß dem Stand der Technik wird noch in Fig. 3 näher erläutert.

Die spektral geformten Q-Signalkomponenten werden von einem Addierer AD5 addiert und die spektral geformten I-Signalkomponenten werden von einem Addierer AD6 addiert. Die Q- und I-Signalkomponenten werden gegebenenfalls einer Frequenzkorrektur (nicht dargestellt) unterzogen und dann gemäß Fig. 1 an den Digital-Analog-Umsetzer DAC weitergegeben.

Fig. 3 zeigt den Aufbau eines bekannten Filters DF1 bzw. DF2, wie es in der in Fig. 2 dargestellten Modulatoreinrichtung MOD' eingesetzt wird. Das Filter weist ein Schieberegister mit 55 Speicherplätzen T und 56 Multiplizierer M sowie 55 Addierer AD auf. Die Multiplizierer M liegen mit ihrem einen Eingang an Parallelabgriffen vor, zwischen und hinter den Speicherplätzen T an und werden an ihrem anderen Eingang mit den Filterkoeffizienten C₀, ..., C₅₅ versorgt. Die Addierer AD addieren die von den Multiplizierern M berechneten Multiplikationsergebnisse auf.

Die Koeffizienten C₀, ..., C₅₅ des Filters ergeben sich aus den Abtastwerten der Filter-Übertragungsfunktion bei einer Rate von M/T_{C}. Bei der hier dargestellten Ausführung mit 56 Filterkoeffizienten C₀, ..., C₅₅ finden bei einer M = 4-fachen Überabtastung in dem Filter vierzehn Chips der Q- bzw. I-Signalkomponente Platz.

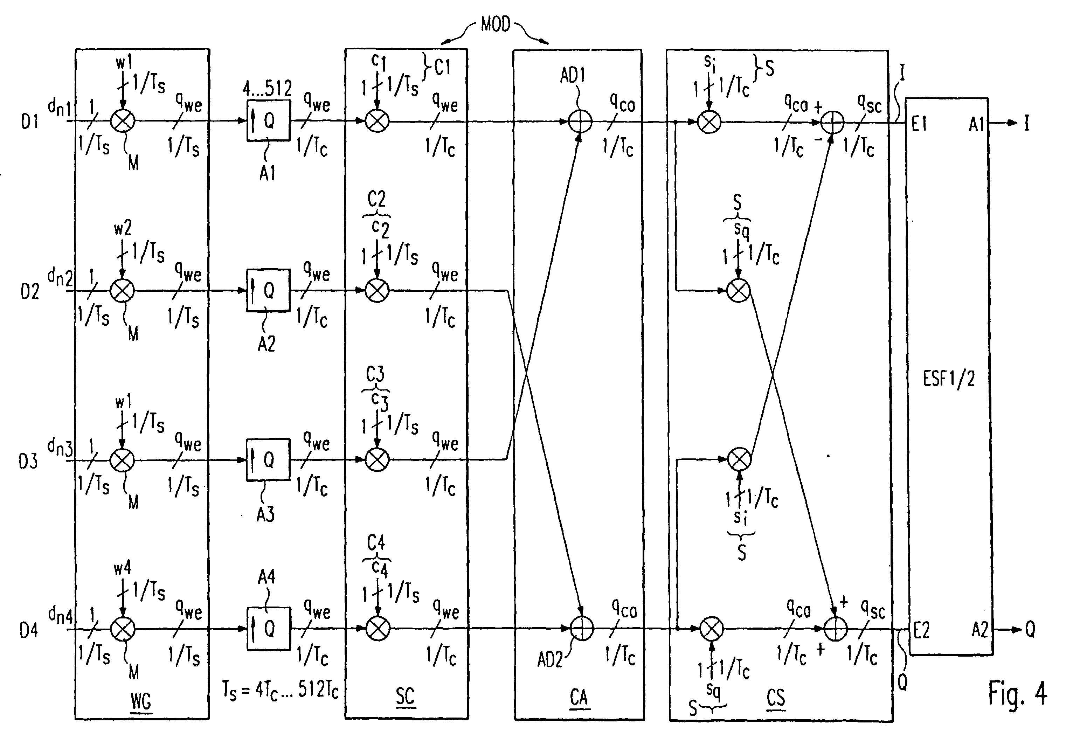

Fig. 4 zeigt das Blockschaltbild einer Modulatoreinrichtung MOD, wie sie in der vorliegenden Erfindung zum Einsatz kommen kann. Dieselben Teile wie in den vorhergehenden Figuren sind mit denselben Bezugszeichen gekennzeichnet bzw. mit den gleichen Schaltungssymbolen dargestellt.

An den Dateneingängen D1, D2, D3, D4 liegen wiederum die Datenfolgen {dₙ₁}, {dₙ₂}, {dₙ₃}, {dₙ₄} mit einer Wortbreite 1 und der Datensymbolrate 1/T_{S} an. Die einzelnen Datensymbole dₙ₁, dₙ₂, dₙ₃, dₙ₄ können dem Wertevorrat {1, -1} entnommen sein.

In einer optionalen Gewichtungseinheit WG werden die Datensymbole durch Multiplikation mit Gewichtsfaktoren w1, w2, w3 bzw. w4 im Symboltakt gewichtet. Die an den Ausgängen der Gewichtungseinheit bereitstehenden Datensignale weisen eine Wortbreite q_{we} > 1 auf. Ihre Datenrate ist unverändert 1/T_{S}.

Die Gewichtsfaktoren w1, w2, w3, w4 können als "Lautstärken-Faktoren" aufgefaßt werden. Durch Verwendung kanalweise unterschiedlicher Gewichtsfaktoren w1, w2, w3, w4 können unterschiedliche Funkdistanzen bezüglich der verschiedenen Kanäle berücksichtigt und/oder bei Verwendung kanalweise verschiedener Spreizfaktoren Q die dadurch bewirkten unterschiedlichen Kanalenergien kompensiert werden.

Die Abtaststufen A1, A2, A3, A4 erhöhen die Signalrate um den Überabtastfaktor (= Spreizfaktor) Q und stellen an ihrem Ausgang ein hochratiges Signal im Chipzeit-Takt 1/Tc zur Verfügung. Der Überabtastfaktor Q kann beispielsweise zwischen 4 und 512 betragen, d.h. T_{S} = 4T_{C}...512T_{C}.

Die Q-fach überabgetasteten Datensymbole dₙ₁, dₙ₂, dₙ₃, dₙ₄ werden dann in dem Spreizcodierer SC durch Aufprägen einer kanalspezifischen digitalen Spreizcodefolge spreizcodiert. Auf die von dem ersten Dateneingang D1 zugeführten Datensymbole dₙ₁ wird jeweils eine erste Spreizcodefolge C1 bestehend aus Q digitalen Chips c₁ aufgeprägt. Bezüglich der von den weiteren Dateneingängen D2, D3, D4 zugeführten Datensymbole dₙ₂, dₙ₃, dₙ₄ wird entsprechend verfahren. Durch Aufprägen der Spreizcodefolgen C1, C2, C3, C4 erhält jedes Datensymbol gleichsam einen "Fingerabdruck" seines Kanals. Am Ausgang des Spreizcodierers SC stehen die spreizcodierten Datensignale mit einer Signalrate von 1/T_{C} und einer (unveränderten) Wortbreite von q_{we} bereit.

Im Signalweg hinter dem Spreizcodierer SC befindet sich ein Kanaladdierer CA. Der Kanaladdierer CA umfaßt zwei im Chiptakt arbeitende Addierer AD1, AD2. Der Addierer AD1 addiert die von den Dateneingängen D1, D3 stammenden Signaldaten und der Addierer AD2 addiert die von den Dateneingängen D2 und D4 stammenden Signaldaten. An den beiden Ausgängen des Kanaladdierers CA liegen Datensignale mit einer Signalrate von 1/T_{C} und einer (gegebenenfalls erhöhten) Wortbreite von q_{ca} vor.

Ein komplexer Verwürfler CS dient zum Aufprägen einer Basisstations-Kennung auf die Datensignale. Zu diesem Zweck werden die von dem Kanaladdierer CA ausgegebenen Signale in der dargestellten Weise mit den Real- bzw. Imaginärteilen s_{g} bzw. sᵢ der Elemente einer komplexwertigen Verwürfelungs-Codefolge S multipliziert und nachfolgend wie gezeigt kreuzweise addiert. Ferner dient der komplexe Verwürfler CS zur Erzeugung der I-und Q-Signalkomponenten des Sendesignals, die am Ausgang des komplexen Verwürflers CS mit einer Signairate von 1/T_{C} und einer Wortbreite von q_{sc} zur Verfügung stehen.

Diese beiden Signalkomponenten werden der erfindungsgemäßen Einrichtung zur spektralen Signalformung ESF1/2 an ihren Eingängen E1, E2 zugeführt. An ihren Ausgängen A1, A2 stellt die Einrichtung zur spektralen Signalformung ESF1/2 die spektral geformten (d.h. modulierten) I- bzw. Q-Signalkomponenten bereit. Diese werden nach einer nicht dargestellten Frequenzkorrektur gemäß Fig. 1 in Analogsignale umgesetzt und als Funksignal abgestrahlt.

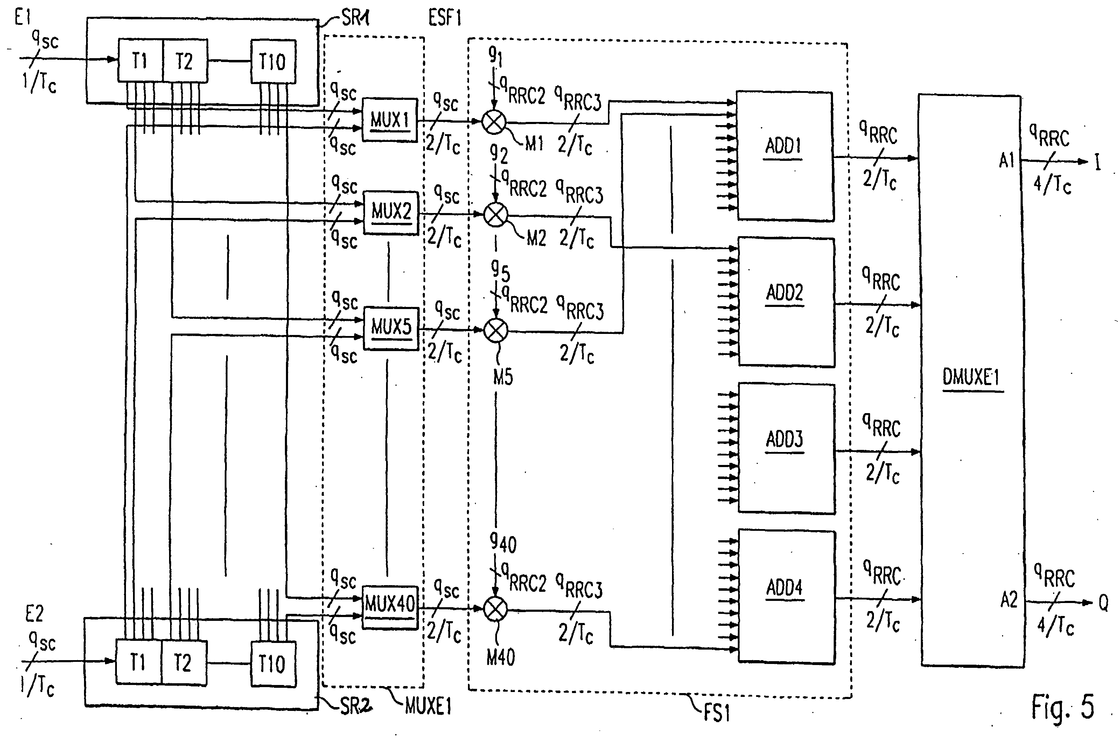

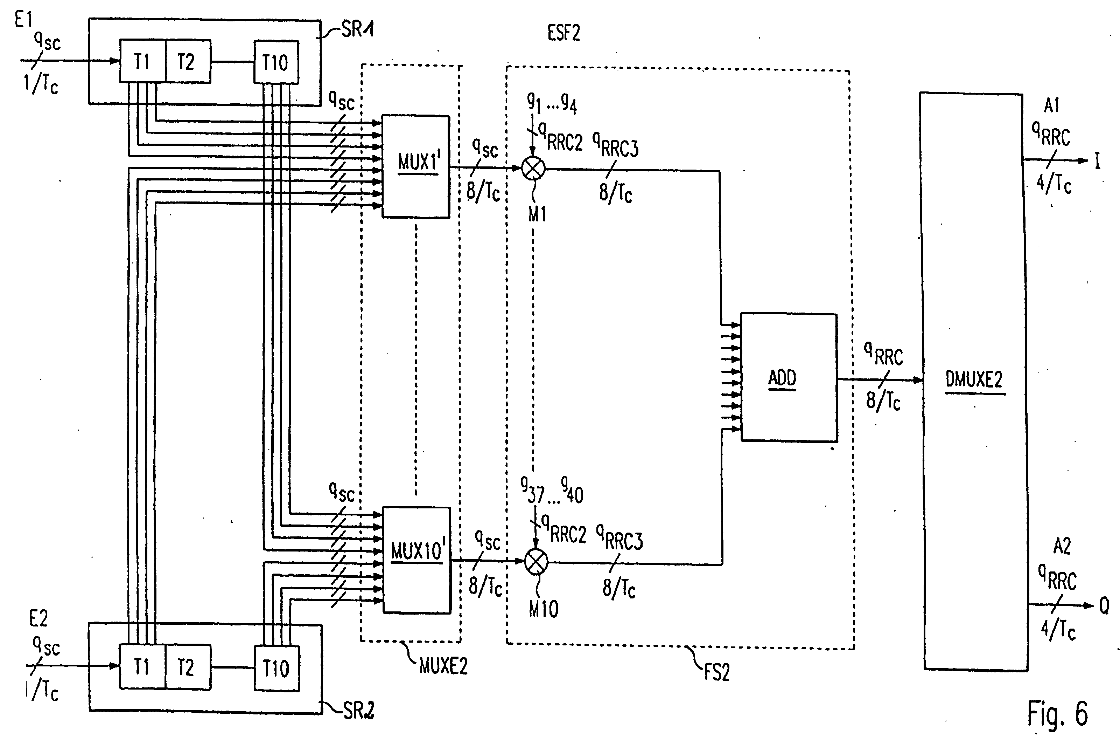

Die Fig. 5 und 6 zeigen zwei Ausführungsformen ESF1 bzw. ESF2 der erfindungsgemäßen Einrichtung zur spektralen Signalformung in Blockschaltbildform.

Nach Fig. 5 werden die I-Signalkomponente einem ersten Schieberegister SR1 und die Q-Signalkomponente einem zweiten Schieberegister SR2 mit jeweils zehn Speicherplätzen T1, T2, ..., T10 zugeführt. Jeder Speicherplatz T1, T2, ..., T10 speichert ein Datenwort der Wortbreite q_{sc}. Die Datenwörter werden im Chiptakt 1/T_{C} durch die beiden Schieberegister SR1 und SR2 hindurchgeschoben.

An jedem Speicherplatz T1, T2, ..., T10 beider Schieberegister SR1 und SR2 befinden sich jeweils vier Abgriffe, so daß jedes Schieberegister SR1 und SR2 insgesamt 40 Abgriffe aufweist. Die insgesamt 80 Abgriffe der beiden Schieberegister SR1 und SR2 werden einer Multiplexiereinheit MUXE1 zugeführt.

Die Multiplexiereinheit MUXE1 umfaßt 40 Multiplexer MUX1, MUX2, ..., MUX40. Jeder Multiplexer MUX1, MUX2, ..., MUX40 hat zwei Multiplexereingänge. Der erste Abgriff der ersten Speicherzelle T1 des Schieberegisters SR1 im I-Signalpfad führt zu dem einen Multiplexereingang des ersten Multiplexers MUX1 und der erste Abgriff der ersten Speicherzelle T1 des Schieberegisters SR2 im Q-Signalpfad führt zu dem zweiten Multiplexereingang des ersten Multiplexers MUX1. In analoger Weise führen jeweils die zweiten Abgriffe der beiden Schieberegister SR1 und SR2 zu den beiden Multiplexereingängen des zweiten Multiplexers MUX2, ..., und die beiden vierzigsten Abgriffe der Schieberegister SR1 und SR2 führen zu den beiden Multiplexereingängen des vierzigsten Multiplexers MUX40.

Die Multiplexer MUX1, MUX2, ..., MUX40 leiten abwechselnd die von den I- und den Q-Signalkomponenten stammenden Signalwörter weiter, wobei zur Zwischenspeicherung der momentan gerade nicht am Multiplexerausgang ausgegebenen Signalwörter Zwischenspeicher in den Multiplexern MUX1, MUX2, ..., MUX40 vorhanden sind.

An den vierzig Ausgängen der Multiplexiereinheit MUXE1 stehen mit einer Signalrate von 2/T_{C} (abwechselnd) Signalwörter der Wortbreite q_{sc} der I- und Q-Signalkomponenten bereit.

Die vierzig Ausgänge der Multiplexiereinheit MUXE1 werden einer Filterschaltung FS1 zugeführt. Die Filterschaltung FS1 umfaßt vierzig Multiplizierer M1, M2, ..., M40 sowie vier Addierer ADD1, ADD2, ADD3 und ADD4. Jeder Multiplizierer M1 M2, ..., M40 multipliziert ein Ausgangssignal der Multiplexiereinheit MUXE1 mit einem einzigen Filterkoeffizienten g₁, g₂, ..., g₄₀. Die Filterkoeffizienten g₁, g₂, ..., g₄₀ werden (in diesem speziellen Ausführungsbeispiel) durch eine 4-fache Überabtastung der auf ein Zeitintervall von 10 T_{C} begrenzten Impulsantwort der zugrundeliegenden spektralen Filterfunktion (d.h. der Übertragungsfunktion der Filterschaltung) bestimmt.

Die spektrale Filterfunktion kann beispielsweise eine RRC-(root raised cosine)Funktion sein. Eine solche Filterschaltung wird als RRC-Filterschaltung bezeichnet. Die RRC-Funktion ist durch die Funktion (1 + cos x)^{1/2}/2^{1/2} im Bereich 0 ≤ x ≤ π definiert, welche den funktionalen Zusammenhang der Filterflanke des RRC im Spektralbereich wiedergibt.

Die Addierer ADD1, ADD2, ADD3, ADD4 weisen jeweils zehn Addiereingänge auf. Die zehn Addiereingänge des Addierers ADD1 sind mit den Ausgängen der Multiplizierer M1, M5, M9, M13, M17, M21, M25, M29, M33 und M37 verbunden, die Eingänge des Addierers ADD2 sind mit den Ausgängen der Multiplizierer M2, M6, M10, M14, M18, M22, M26, M30, M34, M38 verbunden, usw. Mit anderen Worten sind die vier Addierer ADD1 bis ADD4 den vier Abgriffen 1 bis 4 jedes Speicherplatzes T1, T2, ..., T10 der Schieberegister SR1 und SR2 zugeordnet.

Der Filterschaltung FS1 ist eine Demultiplexiereinheit DMUXE1 nachgeschaltet. Die Demultiplexiereinheit DMUXE1 demultiplext zunächst jeden Addiererausgang in bezug auf die I- und Q-Signalkomponenten und multiplext anschließend jeweils getrennt für die I-Signalkomponente und die Q-Signalkomponente die Ergebnisse der vier Addierer ADD1, ADD2, ADD3, ADD4. Auf diese Weise entsteht an dem Ausgang A1 der Einrichtung zur spektralen Signalerformung ESF1 eine vierfach überabgetastete (gefilterte) I-Signalkomponente und an dem Ausgang A2 eine vierfach überabgetastete (gefilterte) Q-Signalkomponente.

Eine zweite Ausführungsform der erfindungsgemäßen Einrichtung zur spektralen Signalformung ESF2 ist in Fig. 6 dargestellt. Die Einrichtung ESF2 weist ebenfalls zwei Schieberegister SR1 und SR2 mit jeweils zehn Speicherplätzen T1, T2, ..., T10 und vier Abgriffen pro Speicherplatz auf. Im Unterschied zu ESF1 umfaßt ESF2 nur zehn Multiplexer MUX1', MUX2', ..., MUX10', die in einer Multiplexiereinheit MUXE2 zusammengefaßt sind. Jeder Multiplexer MUX1', MUX2', ..., MUX10' weist acht Multiplexereingänge und eine entsprechende Anzahl von Pufferspeichern auf. Die acht Multiplexereingänge des Multiplexers MUX1' sind mit den vier Abgriffen der beiden Speicherplätze T1 bezüglich der I-Signalkomponente und der Q-Signalkomponente verbunden, usw. Mit anderen Worten ist jeder der zehn Multiplexer MUX1', MUX2', ..., MUX10' genau einem Speicherplatzpaar T1, T1; T2, T2; ...; T10, T10 der beiden Schieberegister SR1 und SR2 zugeordnet.

Die zehn Ausgänge der Multiplexiereinheit MUXE2 weisen jeweils eine Signalrate von 8/T_{C} auf.

Die zehn Ausgänge der Multiplexiereinheit MUXE2 werden einer Filterschaltung FS2 zugeführt. Die Filterschaltung FS2 umfaßt zehn Multiplizierer M1, ..., M10 sowie einen Addierer ADD, dessen zehn Eingänge mit den Ausgängen der Multiplizierer M1, ..., M10 in Verbindung stehen.

Die Multiplizierer M1, ..., M10 arbeiten im 8-fachen Chipzeittakt. Die in Fig. 6 dargestellten Filterkoeffizienten g₁ bis g₄₀ werden wiederum durch zehn Abtastwerte mit 4-facher Überabtastung der spektralen Filterfunktion (insbesondere-RRC-Funktion) ermittelt. Im Unterschied zu der Ausführung der Filterschaltung FS1 in Fig. 5 verarbeitet jeder Multiplizierer M1, ..., M10 hier jedoch eine Sequenz von z.B. genau vier Filterkoeffizienten, d.h. der Multiplizierer M1 verarbeitet die Filterkoeffizienten g₁₋₄, der Multiplizierer M2 verarbeitet die Filterkoeffizienten g₅₋₈, ..., und der Multiplizierer M10 verarbeitet die Filterkoeffizienten g₃₇₋₄₀. Da die Multiplizierer M1, ..., M10 wie erwähnt im 8-fachen Chipzeittakt arbeiten, verarbeitet jeder Multiplizierer M1, ..., M10 sequentiell vier Abtastungen der I-Signalkomponente und danach vier Abtastungen der Q-Signalkomponente jeweils mit den ihm zugeordneten Filterkoeffizienten.

In dem Addierer ADD werden anschließend die Ergebnisse der zehn Multiplizierer M1, ..., M10 addiert.

Die Additionsergebnisse werden mit einer Signalrate von 8/T_{C} einem Demultiplexer DMUXE2 mit Pufferspeicher mitgeteilt. Der Demultiplexer DMUXE2 teilt die Additionsergebnisse wieder in die I-Signalkomponente und die Q-Signalkomponente auf, welche mit einer Signalrate von 4/T_{C} an den Ausgängen A1 bzw. A2 der Einrichtung zur spektralen Signalformung ESF2 ausgegeben werden.

Beiden Ausführungsformen ESF1 und ESF2 ist gemeinsam, daß die Multiplizierer der Filterkoeffizienten im Multiplexverfahren sowohl für die I- als auch die Q-Signalkomponente verwendet werden, wodurch eine Reduktion der Anzahl der implementierten Multiplizierer erreicht wird. Bei einer mit den Ausführungsformen ESF1 und ESF2 vergleichbaren Gedächtnislänge von 10 T_{C} würde die in Fig. 3 gezeigte bekannte Filterstruktur 2 x 40 Multiplizierer umfassen, wohingegen sich in der Ausführung der ESF1 (siehe Fig. 5) eine Anzahl von 1 x 40 Multiplizierern und in der Ausführung der ESF2 (siehe Fig. 6) eine Anzahl von 1 x 10 Multiplizierern ergibt. Mit der Reduktion der Anzahl der Multiplizierer reduziert sich gleichzeitig die benötigte Chipfläche für den Senderchip.

Eine weitere vorteilhafte Gemeinsamkeit beider Ausführungsformen besteht darin, daß die Eingangssignale für die Einrichtung zur spektralen Signalformung ESF1/2 nicht (mehr) überabgetastet vorliegen müssen, die Ausgangssignale der Einheiten ESF1/2 jedoch mit der für die weitere Signalverarbeitung erforderlichen (z.B. 4-fachen) Überabtastung bereitgestellt werden.

## Patentansprüche

1. Einrichtung zur spektralen Formung eines wertediskreten Sendesignals in einem Funksender (SE),
- mit einem ersten Eingang (E1) zur Entgegennahme einer Inphasal-Komponente des Sendesignals und mit einem zweiten Eingang (E2) zur Entgegennahme einer Quadratur-Komponente des Sendesignals,
- mit einem ersten Schieberegister (SR1) mit N ersten Speicherplätzen (T1,..., T10), das mit dem ersten Eingang (E1) verbunden ist, und einem zweiten Schieberegister (SR2) mit N zweiten Speicherplätzen (T1, ..., T10), das mit dem zweiten Eingang (E2) verbunden ist,
- mit einer Multiplexiereinheit (MUXE1, MUXE2) mit mehreren Multiplexern (MUX1,..., MUX40; MUX1',..., MUX10'), die im Signalweg hinter den beiden Schieberegistern (SR1, SR2) und vor einer Filterschaltung (FS1, FS2) angeordnet ist,
- mit der eine Mehrzahl von Multiplizierern (M1, ..., M40) und zumindest einen Addierer (ADD) umfassenden wertediskreten Filterschaltung (FS1, FS2), und
- mit einem ersten Ausgang (A1) zum Bereitstellen der gefilterten Inphasal-Komponente des Sendesignals und mit einem zweiten Ausgang (A2) zum Bereitstellen der gefilterten Quadratur-Komponente des Sendesignals,
**dadurch gekennzeichnet,**
- **dass** jeder der Speicherplätze (T1,..., T10) der beiden Schieberegister (SR1, SR2) M>1 Signalabgriffe aufweist und
- **dass** im Signalweg hinter der Filterschaltung (FS1, FS2) und vor den beiden Ausgängen (A1, A2) eine Demultiplexiereinheit (DMUXE1, DMUXE2) angeordnet ist.

2. Einrichtung nach Anspruch 1,
**dadurch gekennzeichnet,**
**daß** einem einzelnen Multiplizierer (M1, ..., M10) mehrere Filterkoeffizienten zugeordnet sind.

3. Einrichtung nach Anspruch 1 oder 2,
**dadurch gekennzeichnet,**
**daß** die Multiplexiereinheit (MUXE1) aus N x M Multiplexern (MUX1, MUX40) mit jeweils zwei Multiplexereingängen aufgebaut ist.

4. Einrichtung nach Anspruch 1 oder 2,
**dadurch gekennzeichnet,**
**daß** die Multiplexiereinheit aus N Multiplexern mit jeweils 2 x M Multiplexiereingängen aufgebaut ist.

5. Einrichtung nach einem der vorhergehenden Ansprüche,
**dadurch gekennzeichnet,**
**daß** die den Multiplizierern (M1, ..., M40) zugeordneten Filterkoeffizienten derart gewählt sind, daß die Filterschaltung (FS1, FS2) eine Root-Raised-Cosine-Filterung (RRC) durchführt.

6. Einrichtung nach einem der vorhergehenden Ansprüche,
**dadurch gekennzeichnet,**
**daß** die an den Ausgängen (A1, A2) bereitgestellten Inphasal- und Quadratur-Komponenten eine mehrfach, insbesondere 4-fach höhere Abtastrate als die entsprechenden Inphasal- und Quadratur-Komponenten an den Eingängen (E1, E2) aufweisen.

7. Verfahren zur spektralen Formung eines wertediskreten Sendesignals in einem Funksender,
- bei dem eine Inphasal-Komponente des Sendesignals über einen ersten Eingang (E1) an einem ersten Schieberegister (SR1) mit N ersten Speicherplätzen (T1,..., T10) und eine Quadratur-Komponente des Sendesignals über eine zweiten Eingang (E2) an einem zweiten Schieberegister (SR2) mit N zweiten Speicherplätzen (T1,..., T10) anliegen und die beiden Komponenten des Sendesignals in einer eine Mehrzahl von Multiplizierern (M1, ..., M40) und zumindest einen Addierer (ADD) umfassenden wertediskreten Filterschaltung (FS1, FS2) gefiltert werden, und wobei im Signalweg vor dem Filtern eine Multiplexierung der Inphasal- und Quadratur-Komponenten des Sendesignals durchgeführt wird,
**dadurch gekennzeichnet,**
- **daß** an jedem der Speicherplätze (T1,..., T10) der beiden Schieberegister (SR1, SR2) jeweils ein Ausgangssignal über M>1 Speicherabgriffe abgegriffen wird, und
- **daß** im Signalweg nach dem Filtern eine Demultiplexierung der Inphasal- und der Quadratur-Komponente des Sendesignals durchgeführt wird.

8. Verfahren nach Anspruch 7
**dadurch gekennzeichnet,**
**daß** einem einzelnen Multiplizierer (M1, ..., M10) mehrere Filterkoeffizienten zugeordnet sind.

9. Verfahren nach Anspruch 7 oder 8
**dadurch gekennzeichnet,**
**daß** die Filterschaltung (FS1, FS2) eine Root-Raised-Cosine-Filterung (RRC) durchführt.

## Claims

1. A device for spectral shaping of a value-discrete transmit signal in a radio transmitter (SE),
- having a first input (E1) for receiving an in-phase component of the transmit signal, and having a second input (E2) for receiving a quadrature component of the transmit signal,
- having a value-discrete filter circuit (PS1, FS2) comprising a plurality of multipliers (M1, ..., M40) and
- having a first output (A1) for providing the filtered in-phase component of the transmit signal, and having a second output (A2) for providing the quadrature component of the transmit signal,
**characterized in that** a multiplexer unit (MUXE1, MUXE2) is arranged in the signal path downstream of the two inputs (E1, E2) and upstream of the filter circuit (FS1, FS2), and a demultiplexer unit (DMUXE1, DMUXE2) is arranged in the signal path downstream of the filter circuit (FS1, FS2) and upstream of the two outputs (A1, A2).

2. The device as claimed in claim 1, **characterized in that** a plurality of filter coefficients are assigned to a single multiplier (M1, ..., M10).

3. The device as claimed in claim 1 or 2,
**characterized in that** the in-phase and quadrature signal components present at the inputs (E1, E2) are fed in each case to a shift register (SR) consisting of N memory locations (T1, ..., T10) and M signal taps per memory location (T1, ..., T10), and **in that** the multiplexer unit (MUXE1) is constructed from N × M multiplexers (MUX1, MUX40) with two multiplexer inputs in each case.

4. The device as claimed in claim 1 or 2,
**characterized in that** the in-phase and quadrature signal components present at the inputs (E1, E2) are fed in each case to a shift register (SR) consisting of N memory locations (T1, ..., T10) and M signal taps per memory location (T1, ..., T10), and **in that** the multiplexer unit is constructed from N multiplexers with 2 × M multiplexer inputs in each case.

5. The device as claimed in one of the preceding claims, **characterized in that** the filter coefficients assigned to the multipliers (M1, ..., M40) are selected in such a way that the filter circuit (FS1, FS2) carries out an RRC filtering.

6. The device as claimed in one of the preceding claims, **characterized in that** the in-phase and quadrature components provided at the outputs (A1, A2) have a multiple, in particular 4-fold higher sampling rate than the corresponding in-phase and quadrature components at the inputs (E1, E2).

7. A method for spectral shaping of a value-discrete transmit signal in a radio transmitter,
- in which an in-phase component and a quadrature component of the transmit signal are filtered in a value-discrete filter circuit (FS1, FS2) comprising a plurality of multipliers (M1, ..., M40), **characterized in that** multiplexing of the in-phase and quadrature components of the transmit signal is carried out in the signal path upstream of the filtering.

8. The method as claimed in claim 7, **characterized in that** a plurality of filter coefficients are assigned to a single multiplier (M1, ..., M10).

9. The method as claimed in claim 7 or 8,
**characterized in that** the filter circuit (FS1, FS2) carries out an RRC filtering.

## Revendications

1. Dispositif de mise forme spectrale d'un signal d'émission à valeur discrète dans un émetteur radio (SE),
- comprenant une première entrée (E1) de réception d'une composante en phase du signal d'émission et une deuxième entrée (E2) de réception d'une composante en quadrature du signal d'émission,
- comprenant un premier registre (SR1) à décalage ayant N premiers emplacements (T1, ..., T10) de mémoire, qui est relié à la première entrée (E1) et un deuxième registre (SR2) à décalage ayant N deuxièmes emplacements (T1, ..., T10) de mémoire, qui est relié à la deuxième entrée (E2),
- comprenant une unité (MUXE1, MUXE2) de multiplexage ayant plusieurs multiplexeurs (MUX1, ..., MUX40 ; MUX1', ..., MUX10') qui sont disposés dans le trajet de signal derrière les deux registres (SR, SR2) à décalage et devant un circuit (FS1, FS2) de filtrage,
- comprenant le circuit (FS1, FS2) de filtrage à valeur discrète comportant une multiplicité de multiplicateurs (M1, ..., M40) et au moins un additionneur (ADD), et
- comprenant une première sortie (A1) de mise à disposition de la composante en phase filtrée du signal d'émission et une deuxième sortie (A2) de mise à disposition de la composante en quadrature filtrée du signal d'émission,
**caractérisé en ce que**,
- chacun des emplacements (T1, ..., T10) de mémoire des deux registres (SR1, SR2) à décalage à M>1 prises de signal et
- **en ce que** dans le trajet du signal, il est prévu derrière le circuit (FS1, FS2) de filtrage et devant les deux sorties (A1, A2) une unité (DMUXE1, DMUXE2) de démultiplexage.

2. Dispositif suivant la revendication 1, **caractérisé en ce que** plusieurs coefficients de filtrage sont associés à un multiplicateur (M1, ..., M10) individuel.

3. Dispositif suivant la revendication 1 ou 2, **caractérisé en ce que** l'unité (MUXE1) de multiplexage est constituée de N x M multiplexeurs (MEX1, MEX40) ayant respectivement deux entrées de multiplexeurs.

4. Dispositif suivant la revendication 1 ou 2, **caractérisé en ce que** l'unité de multiplexage est constituée de N multiplexeurs ayant respectivement 2 x M entrées de multiplexeur.

5. Dispositif suivant l'une des revendications précédentes,
**caractérisé en ce que** les coefficients de filtrage associés aux multiplicateurs M1, ..., M40) sont choisis de façon à ce que le circuit (FS1, FS2) de filtrage effectue un filtrage (RRC) Root-Raised-Cosinus.

6. Dispositif suivant l'une des revendications précédentes,
**caractérisé en ce que** les composantes en phase et en quadrature mises à disposition aux sorties (A1, A2) ont un taux d'échantillonnage plusieurs fois notamment 4 fois plus grand que les composantes en phase et en quadrature correspondantes aux entrées (E1, E2).

7. Procédé de mise en forme spectrale d'un signal d'émetteur à valeur discrète dans un émetteur radio,
- dans lequel on applique une composante en phase des signaux d'émission par l'intermédiaire d'une première entrée (E1) à un premier registre (FR1) à décalage ayant N premiers emplacements (T1, ..., T10) de mémoire et une composante en quadrature du signal d'émission par l'intermédiaire d'une deuxième entrée (E2) à un deuxième registre (SR2) à décalage ayant N deuxièmes emplacements (T1, ..., T10) de mémoire et on filtre les deux composantes du signal d'émission dans un circuit (FS1, FS2) de filtrage à valeur discrète comprenant une pluralité de multiplicateurs (M1, ..., M40) et au moins un additionneur (ADD) et on effectue dans le trajet du signal avant les filtres un multiplexage des composantes en phase et en quadrature du signal d'émission,
**caractérisé en ce que**,
- on prélève sur chacun des emplacements (T1, ..., T10) de mémoire des deux registres (SR1, SR2) à décalage respectivement un signal de sortie par M>1 prises de mémoire, et
- on effectue dans le trajet du signal après les filtres un démultiplexage de la composante en phase et de la composante en quadrature du signal d'émission.

8. Procédé suivant la revendication 7, **caractérisé en ce que** plusieurs coefficients de filtrage sont associés à un multiplicateur (M1, .... M10) individuel.

9. Procédé suivant la revendication 7 ou 8, **caractérisé en ce que** le circuit (FS1, FS2) de filtrage effectue un filtrage (RRC) Root-Raised-Cosinus.
